# EUROPEAN PATENT APPLICATION

(11) **EP 3 442 266 A1**
(43) Date of publication of application: **13.02.2019**
(21) Application number: 18188522.9
(22) Date of filing: 10.08.2018
(51) Int. Cl.: H04W 36/00

(54) **DEVICE AND METHOD OF HANDLING A SECONDARY NODE CHANGE IN DUAL CONNECTIVITY**

(30) Priority: 11.08.2017 US 201762544002 P; 30.09.2017 US 201762566335 P
(71) Applicant: HTC Corporation, Taoyuan City 330, (TW)
(72) Inventor: WU, Chih-Hsiang, Taoyuan City 330 (TW)
(74) Representative: Carstens, Dirk Wilhelm

(57) **Abstract**

A network is configured to execute instructions of a first base station (BS) performing a first dual connectivity (DC) operation procedure with a second BS; the first BS transmitting a first radio resource control (RRC) message on a signaling radio bearer (SRB) to a communication device in response to the first DC operation procedure; the first BS receiving a first RRC response message from the communication device on the SRB, in response to the first RRC message; the second BS receiving a first plurality of packet data convergence protocol (PDCP) Service Data Units (SDUs) associated to a first data radio bearer (DRB) from the communication device; and the second BS processing the first plurality of PDCP SDUs according to a first RX_NEXT, a first RX_DELIV and a first RX_REORD which are associated to the DRB.

## Description

### Background of the Invention

### 1. Field of the Invention

The present invention relates to a device and a method used in a wireless communication system, and more particularly, to a device and a method of handling a secondary node change in dual connectivity.

### 2. Description of the Prior Art

In a new radio (NR) system, a master node and a secondary node may be configured to a UE in dual connectivity (DC). It is still unknown how to process (e.g., receive) data, if the secondary node is changed. Thus, it is important to define an operation to solve the problem.

### Summary of the Invention

The present invention therefore provides a method and related communication device for handling a secondary node change in dual connectivity to solve the abovementioned problem.

A network comprising a first base station (BS), a second BS and a third BS, comprises at least one storage device, and at least one processing circuit coupled to the at least one storage device. The at least one storage device stores, and the at least one processing circuit is configured to execute instructions of: the first BS performing a first dual connectivity (DC) operation procedure with the second BS; the first BS transmitting a first radio resource control (RRC) message on a signaling radio bearer (SRB) to a communication device in response to the first DC operation procedure, wherein the first RRC message configures a data radio bearer (DRB) according to at least one resource of the second BS; the first BS receiving a first RRC response message from the communication device on the SRB, in response to the first RRC message; the second BS receiving a first plurality of packet data convergence protocol (PDCP) Service Data Units (SDUs) associated to the DRB from the communication device; the second BS processing the first plurality of PDCP SDUs according to a first RX_NEXT, a first RX_DELIV and a first RX_REORD which are associated to the DRB; the first BS transmitting a second RRC message on the SRB to the communication device, wherein the second RRC message configures the communication device to connect to the third BS; the first BS receiving a second RRC response message responding to the second RRC message on the SRB from the communication device; the second BS transmitting at least one of the first RX_NEXT, the first RX_DELIV and the first RX_REORD to the third BS; the third BS receiving a second plurality of PDCP SDUs associated to the DRB from the communication device; and the third BS processing the second plurality of PDCP SDUs according to the at least one of the first RX_NEXT, the first RX_DELIV and the first RX_REORD.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a wireless communication system according to an example of the present invention.
Fig. 2 is a schematic diagram of a communication device according to an example of the present invention.
Figs. 3A, 3B are flowcharts of a process according to an example of the present invention.
Figs. 4A, 4B are flowcharts of a process according to an example of the present invention.

### Detailed Description

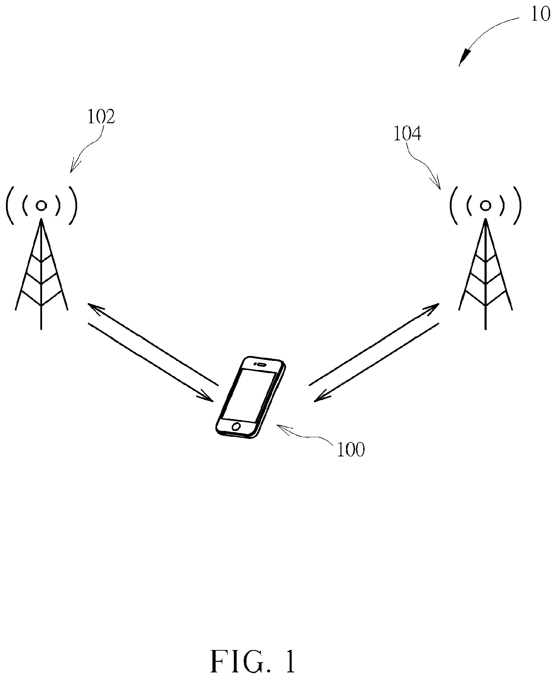

Fig. 1 is a schematic diagram of a wireless communication system 10 according to an example of the present invention. The wireless communication system 10 is briefly composed of a communication device 100, a base station (BS) 102 and a BS 104. In Fig. 1, the communication device 100, the BS 102 and the BS 104 are simply utilized for illustrating the structure of the wireless communication system 10.

The communication device 100 may be configured to communicate with the BS 102 only, i.e., not in dual connectivity (DC). The BS 102 may command the communication device 100 to hand over to the BS 104.

The communication device 100 may be configured to communicate with the BSs 102 and 104 simultaneously according to the DC configured to the communication device 100. In one example, the communication device 100 in the DC receives protocol data units (PDUs) from the BS 102 at one carrier frequency and PDUs from the BS 104 at another carrier frequency, or the communication device 100 transmits PDUs to the BS 102 at one carrier frequency and/or PDUs to the BS 104 at another carrier frequency. In one example, the communication device 100 in the DC receives PDUs from at least one cell of the BS 102 and/or PDUs from at least one cell of the BS 104. The communication device 100 transmits the packets to at least one cell of the BS 102 and/or at least one cell of the BS 104. In addition, one of the BSs 102 and 104 may be a master node (MN) and the other BS may be a secondary node (SN).

The communication device 100 may be a user equipment (UE), a mobile phone, a laptop, a tablet computer, an electronic book, a portable computer system, a vehicle or an airplane. In addition, for an uplink (UL), the communication device 100 is a transmitter and the BS (s) 102 and/or 104 are/is a receiver (s), and for a downlink (DL), the BS(s) 102 and/or 104 are/is a transmitter(s) and the communication device 100 is a receiver.

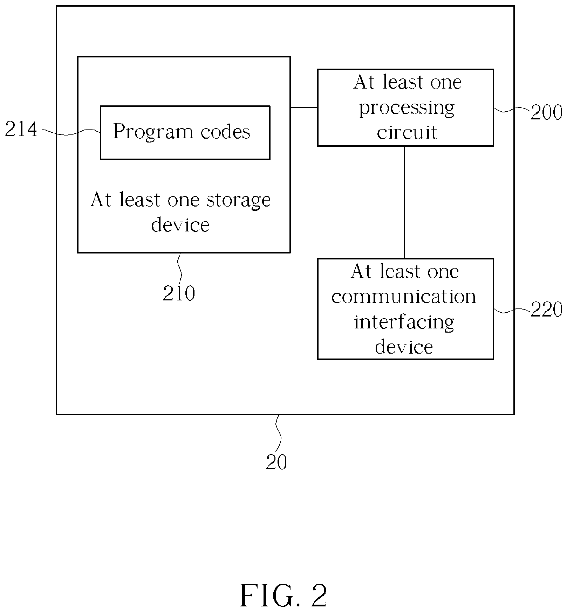

Fig. 2 is a schematic diagram of a communication device 20 according to an example of the present invention. The communication device 20 may be the communication device 100, the BS (s) 102 and/or 104 shown in Fig. 1, but is not limited herein. The communication device 20 may include at least one processing circuit 200 such as a microprocessor or Application Specific Integrated Circuit (ASIC), at least one storage device 210 and at least one communication interfacing device 220. The at least one storage device 210 may be any data storage device that may store program codes 214, accessed and executed by the at least one processing circuit 200. Examples of the at least one storage device 210 include but are not limited to a subscriber identity module (SIM), read-only memory (ROM), flash memory, random-access memory (RAM), hard disk, optical data storage device, non-volatile storage device, non-transitory computer-readable medium (e.g., tangible media), etc. The at least one communication interfacing device 220 is preferably at least one transceiver and is used to transmit and receive signals (e.g., data, messages and/or packets) according to processing results of the at least one processing circuit 200.

In the following examples, a UE is used for representing the communication device 100 in Fig. 1, to simplify the illustration of the examples.

In one example, the UE connecting to the MN has a first signalling radio bearer (SRB), and the MN transmits a measurement configuration on the first SRB to the UE. In detail, the UE transmits a measurement report on the first SRB to the MN in response to the measurement configuration. The MN initiates a SN Addition procedure (e.g., SgNB Addition procedure) with the SN for the UE in response to the measurement report. The MN configures the UE to connect to the SN in response to the SN Addition procedure by transmitting a radio resource control (RRC) message on the first SRB to the UE. The RRC message includes a SN configuration (e.g., SCG configuration) for the UE to connect to the SN. In response to the RRC message, the UE may setup or reconfigure a radio bearer (RB).

A protocol architecture may be used for illustrating that a use of a RB depends on how the RB is setup. A RB may be a data RB (DRB) for data transmission and/or data reception on a user plane, and a SRB for data transmission and/or data reception on a control plane. A DRB configuration may include at least one of a DRB identity, a packet data convergence protocol (PDCP) configuration, a radio link control (RLC) configuration, a logical channel identity and a logical channel configuration (e.g., priority and/or logical channel group). A SRB configuration may include a SRB identity, the RLC configuration and the logical channel configuration. In the DC, there may be three types of RB: a master cell group (MCG) bearer, a secondary cell group (SCG) bearer and a split bearer. The MCG bearer may utilize radio protocol(s) located at the MN, to use radio resources (e.g., time resources and/or frequency resources) of the MN. The SCG bearer may utilize radio protocol (s) located at the SN, to use radio resources (e.g., time resources and/or frequency resources) of the SN. The split bearer may utilize the radio protocol(s) located at both the MN and the SN, to use the radio resources of the MN and the SN. The split bearer may be a MCG split bearer or a SCG split bearer. A DRB may be the MCG bearer, the SCG bearer or the split bearer. A SRB may be configured as the MCG bearer or the split bearer.

In one example, a first communicate device (e.g., the communication device 100 or the BS (s) 102/104) may use the following state variables to communicate PDCP Service Data Units (SDUs) associated to a DRB or a SRB with a second communication device.
- TX_NEXT, which indicates a COUNT value of a next PDCP SDU to be transmitted. For example, the initial value of TX_NEXT may be 0.
- RX_NEXT, which indicates a COUNT value of a next PDCP SDU expected to be received. For example, the initial value of RX_NEXT may be 0.
- RX_DELIV, which indicates a COUNT value of a first PDCP SDU not delivered to upper layers, but still waited for. For example, the initial value of RX_DELIV may be 0.
- RX_REORD, which indicates a COUNT value following a COUNT value associated with a PDCP Data PDU which triggers/triggered t-Reordering to be started or restarted.

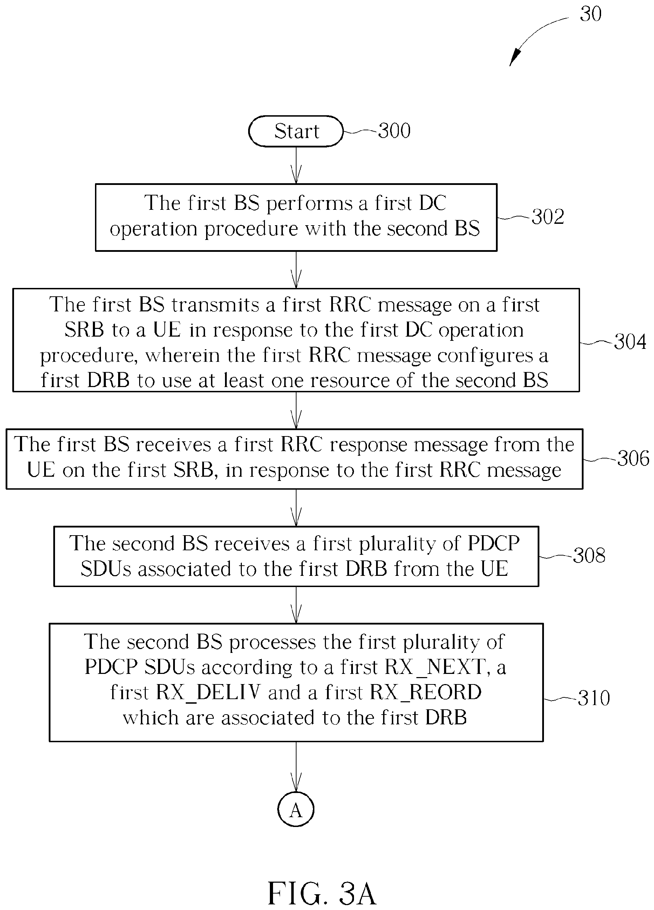

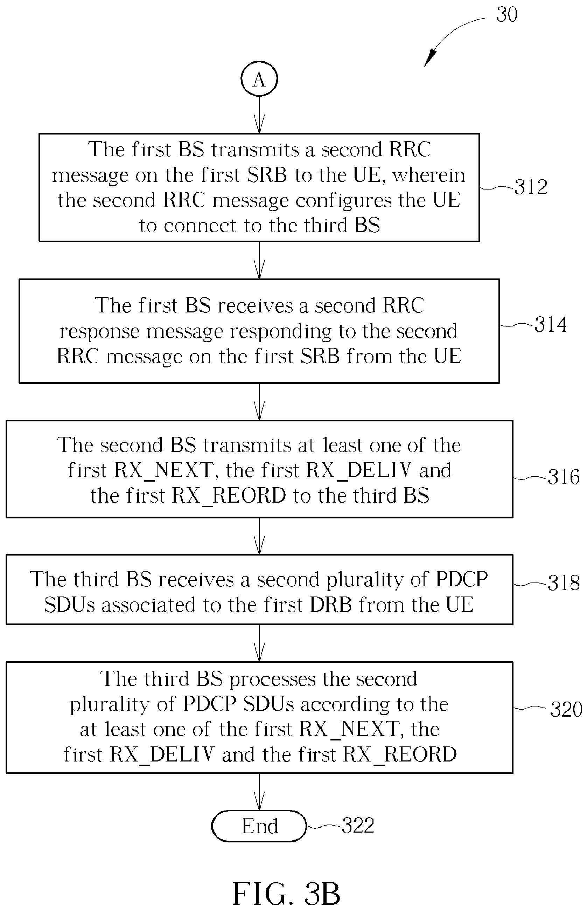

A process 30 in Figs. 3A, 3B may be utilized in a network comprising a first BS (e.g., the BS 102), a second BS (e.g., the BS 104) and a third BS, and includes the following steps:
- Step 300:: Start.
- Step 302:: The first BS performs a first DC operation procedure with the second BS.
- Step 304:: The first BS transmits a first RRC message on a first SRB to a UE in response to the first DC operation procedure, wherein the first RRC message configures a first DRB to use at least one resource of the second BS.
- Step 306:: The first BS receives a first RRC response message from the UE on the first SRB, in response to the first RRC message.
- Step 308:: The second BS receives a first plurality of PDCP Service Data Units (SDUs) associated to the first DRB from the UE.
- Step 310:: The second BS processes the first plurality of PDCP SDUs according to (e.g., by using) a first RX_NEXT, a first RX_DELIV and a first RX_REORD which are associated to the first DRB.
- Step 312:: The first BS transmits a second RRC message on the first SRB to the UE, wherein the second RRC message configures the UE to connect to the third BS.
- Step 314:: The first BS receives a second RRC response message responding to the second RRC message on the first SRB from the UE.
- Step 316:: The second BS transmits at least one of the first RX_NEXT, the first RX_DELIV and the first RX_REORD to the third BS.
- Step 318:: The third BS receives a second plurality of PDCP SDUs associated to the first DRB from the UE.
- Step 320:: The third BS processes the second plurality of PDCP SDUs according to (e.g., by using) the at least one of the first RX_NEXT, the first RX_DELIV and the first RX_REORD.
- Step 322:: End.

In one example, the first BS performs a second DC operation procedure for the UE with the second BS and a third BS for the UE to connect to the third BS. In one example, the first BS transmits the second RRC message on the first SRB to the UE in response to the second DC operation.

In one example, the second BS transmits the at least one of the first RX_NEXT (value), the first RX_DELIV (value) and the first RX_REORD (value) to the third BS in response to the second DC operation procedure, or in response to a SN (e.g., SgNB) Release Request message received (e.g., due to a MN initiated change of a SN) or a SN (e.g., SgNB) Change Confirm message (due to a SN initiated change of a SN) received from the first BS.

In one example, the second BS sends the at least one of the first RX_NEXT (value), the first RX_DELIV (value) and the first RX_REORD (value) to the third BS via the first BS or directly by itself.

In one example, the first DRB using the at least one resource of the second BS is a SCG bearer or a SCG split bearer.

In one example, the second BS updates the first RX_NEXT, the first RX_DELIV and the first RX_REORD to other values (i.e., not the initial values), when processing the first plurality of PDCP Data PDUs.

In one example, the second BS sends all of the at least one of the first RX_NEXT (value), the first RX_DELIV (value) and the first RX_REORD (value) to the third BS.

In one example, the second BS does not transmit one of the at least one of the first RX_NEXT (value), the first RX_DELIV (value) and the first RX_REORD (value) to the third BS. For example, the second BS does not transmit the first RX_REORD to the third BS. In this case, the third BS uses a second RX_REORD to process the second plurality of PDCP SDUs and set the second RX_REORD to the first RX_NEXT. For example, the second BS does not transmit the first RX_NEXT to the third BS. The third BS uses a second RX_NEXT to process the second plurality of PDCP SDUs and set the second RX_NEXT to the first RX_REORD or the first RX_DELIV.

In one example, the second BS transmits status information of other PDCP SDU(s) with PDCP sequence number(s) (SN(s)) after the first RX_DELIV to the third BS, in addition to the COUNT value. In one example, the status information includes COUNT value(s) of the other PDCP SDU (s) which are missing. In one example, the status information is a bitmap which indicates which PDCP SDU (s) is missing and which PDCP SDU(s) is correctly received in the receiving PDCP entity. A bit position of a Nth bit in the bitmap is N, i.e., the bit position of the first bit in the bitmap is 1.

In one example, the second BS does not transmit the first RX_NEXT to the third BS. The third BS may use a second RX_NEXT to process the second plurality of PDCP SDUs, and may set the second RX_NEXT to a COUNT value derived from the first RX_DELIV and the status information. The COUNT value may be derived from a COUNT value of the last PDCP SDU of the other PDCP SDU(s) indicated in the status information. For example, the COUNT value of the last PDCP SDU may be derived from the first RX_DELIV and the position of the last bit with a value of 1 in the bitmap.

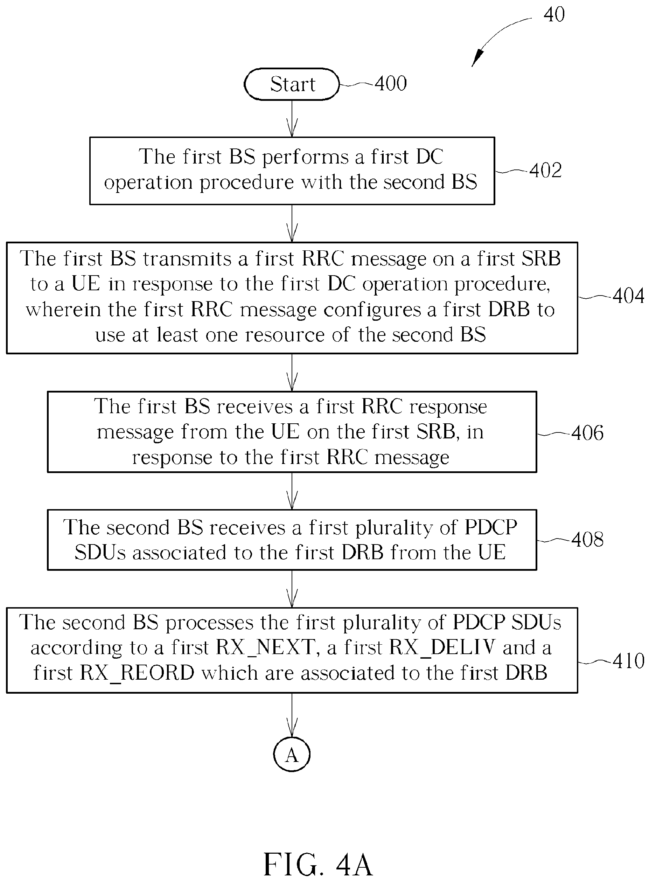

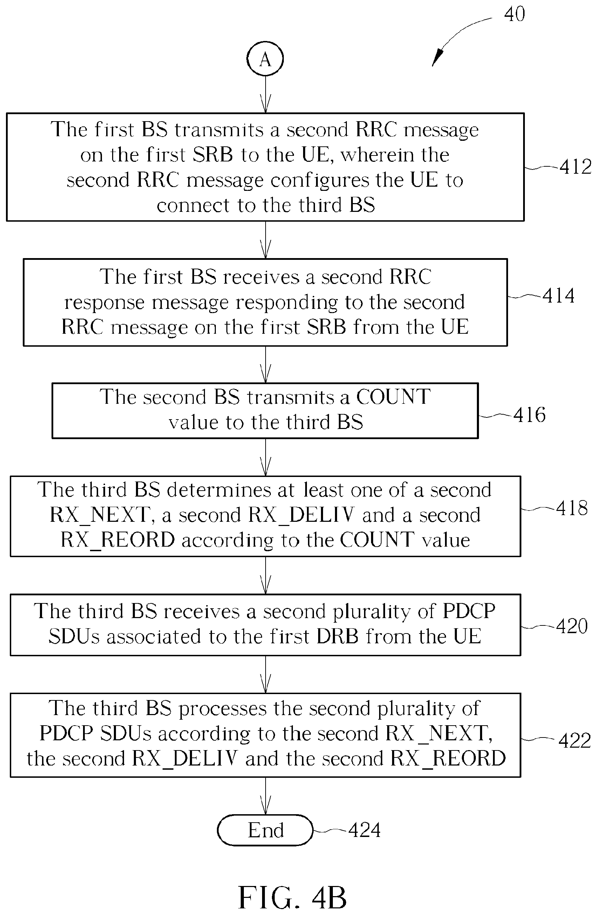

A process 40 in Figs. 4A, 4B may be utilized in a network comprising a first BS (e.g., the BS 102), a second BS (e.g., the BS 104) and a third BS, and includes the following steps:
- Step 400:: Start.
- Steps 402-414:: The same as Steps 302-314.
- Step 416:: The second BS transmits a COUNT value (e.g., of a PDCP SDU) to the third BS.
- Step 418:: The third BS determines at least one of a second RX_NEXT, a second RX_DELIV and a second RX_REORD according to the COUNT value.
- Step 420:: The third BS receives a second plurality of PDCP SDUs associated to the first DRB from the UE.
- Step 422:: The third BS processes the second plurality of PDCP SDUs according to (e.g., by using) the second RX_NEXT, the second RX_DELIV and the second RX_REORD.
- Step 424:: End.

In one example, the first BS performs a second DC operation procedure for the UE with the second BS and a third BS for the UE to connect to the third BS. In one example, the first BS transmits the second RRC message on the first SRB to the UE in response to the second DC operation.

In one example, the second BS updates the first RX_NEXT, the first RX_DELIV and the first RX_REORD to other values (i.e., not initial values), when processing the first plurality of PDCP SDUs.

In one example, the second BS transmits the COUNT value to the third BS in response to the second DC operation procedure, or in response to a new radio BS (SgNB) Release Request message received (e.g., due to a MN initiated change of a SN) or a SgNB Change Confirm message (due to a SN initiated change of a SN) received from the first BS.

In one example, the PDCP SDU in Step 416 is a missing PDCP SDU, i.e., the second BS does not receive the PDCP SDU. The second BS may detect/determine the missing PDCP SDU from the first plurality of PDCP SDUs. For example, the first plurality of PDCP SDUs have a first SDU and a second PDCP SDU. A sequence number of the first PDCP SDU is M, and a sequence number of the second PDCP SDU is N (>M). Then, the second BS detects/determines the missing PDCP SDU which is a PDCP SDU with a sequence number = M+1, ... or N-1, since the UE does not receive the PDCP SDU (s) which has the sequence number = M+1, ..., N-1. The PDCP SDU may be the first missing PDCP SDU.

In one example, the third BS sets the second RX_NEXT to the COUNT value, the second RX_DELIV to the COUNT value and/or the second RX_REORD to the COUNT value.

In one example, the second BS transmits status information of other PDCP SDU(s) to the third BS (via the first BS or directly by itself) in addition to the COUNT value. In one example, the status information includes COUNT values of the other PDCP SDU(s) which are missing. In one example, the status information is a bitmap which indicates which PDCP SDU(s) is missing and which PDCP SDU(s) is correctly received in a PDCP entity associated to the first DRB. A bit position of a Nth bit in the bitmap is N, i.e., the bit position of the first bit in the bitmap is 1.

In one example, the third BS sets the second RX_NEXT, the second RX_DELIV and the second RX_REORD according to/derived from the COUNT value of the first missing PDCP SDU and the status information. For example, the third BS may set the RX_DELIV to the COUNT value. For example, the third BS may set the second RX_NEXT to a COUNT value of the last missing PDCP SDU derived from the COUNT value of the first missing PDCP SDU and the status information. For example, the third BS may set the second RX_NEXT to (a first COUNT value + 1), wherein the first COUNT value is a COUNT value of the last PDCP SDU received by the second BS as indicated in the status information. For example, the first COUNT value may be derived from the COUNT value of the first missing PDCP SDU + the position of the last bit with a value of 1 in the bitmap. The third BS may set the second RX_REORD = the second RX_NEXT or the second RX_DELIV.

The following examples may be applied to the processes 30 and 40.

In one example, the first DRB is a SCG bearer or a SCG split bearer.

In one example, the first RRC message configures the first DRB to be the SCG bearer. The second RRC message may configure the first DRB to be a split bearer from the SCG bearer. The second RRC message may implicitly or explicitly indicate a bearer type change from the SCG bearer to the split bearer. Alternatively, the second RRC message does not change a bearer type of the first DRB (i.e., the first DRB is still the SCG bearer in response to the second RRC message).

In one example, the first RRC message configures the first DRB to be a split bearer. The first BS configures the split bearer as the SCG split bearer with the second BS. The second RRC message may configure the first DRB to be a SCG bearer from the split bearer. The second RRC message may implicitly or explicitly indicate a bearer type change from the split bearer to the SCG bearer. Alternatively, the second RRC message does not change a bearer type of the first DRB (i.e., the first DRB is still the split bearer in response to the second RRC message).

In one example, the UE in the DC with the first BS and the third BS transmits the second plurality of PDCP SDUs associated to the first DRB to the third BS, in response to the second RRC message or when the UE connects to the third BS. The UE may disconnect from the second BS in response to the second RRC message.

In one example, the third BS starts a t-Reordering timer associated to the first DRB in response to the second DC operation procedure, in response to a SgNB Release Request message (e.g., due to a MN initiated change of a SN) or a SgNB Change Confirm message (e.g., due to a SN initiated change of a SN) received from the first BS, or when detecting a transmission from the UE. The transmission may be a PDCP Data PDU (e.g., the first PDCP Data PDU associated to the first DRB when the first DRB is changed to be the MCG bearer or the split bearer), a RA preamble, a medium access control (MAC) control element (CE), a PUCCH transmission or a PUSCH transmission.

In one example, the second BS processes a third plurality of PDCP SDUs associated to the first DRB by using a first TX_NEXT to transmit the third plurality of PDCP SDUs. The second BS updates the first TX_NEXT, when processing the third plurality of PDCP SDUs to be transmitted. Then, the second BS may transmit the first TX_NEXT to the third BS in response to the second DC operation procedure, or in response to a SgNB Release Request message (e.g., due to a MN initiated change of a SN) or a SgNB Change Confirm message (e.g., due to a SN initiated change of a SN) received from the first BS. The third BS may transmit a fourth plurality of PDCP SDUs associated to the first DRB to the UE according to (e.g., by using) the first TX_NEXT.

In one example, the first BS may transmit a third RRC message on the first SRB to the UE, wherein the third RRC message configures a second DRB to be a SCG bearer or a split bearer. The first BS receives a third RRC response message from the UE on the first SRB, in response to the third RRC message. The second BS receives a fifth plurality of PDCP SDUs associated to the second DRB from the UE. The second BS processes the fifth plurality of PDCP SDUs according to (e.g., by using) a third RX_NEXT, a third RX_DELIV and a third RX_REORD which are associated to the second DRB. The second BS does not transmit the third RX_NEXT, the third RX_DELIV and the third RX_REORD to the third BS in response to the second DC operation procedure. The third BS receives a sixth plurality of PDCP SDUs associated to the second DRB from the UE. The third BS processes the sixth plurality of PDCP SDUs according to (e.g., by using) a fourth RX_NEXT, a fourth RX_DELIV and a fourth RX_REORD. The first BS sets (e.g., creates) the fourth RX_NEXT, the fourth RX_DELIV and the fourth RX_REORD to (with) initial values in response to the second DC operation procedure.

In one example, the first BS maintains a fifth RX_NEXT, a fifth RX_DELIV and a fifth RX_REORD associated to the first SRB for receiving the RRC messages on the first SRB. The first BS does not transmit the fifth RX_NEXT, the fifth RX_DELIV and the fifth RX_REORD to the second BS in response to the second DC operation procedure.

In one example, the first BS is a master evolved Node-B (eNB) or a master new radio BS (gNB). The second BS and/or the third BS may be a secondary gNB or a secondary eNB. The first SRB may be a SRB1.

In one example, the first DRB is an acknowledged mode (AM) DRB (e.g., configured to use RLC AM), and the second DRB is an unacknowledged mode (UM) DRB (e.g., configured to use RLC UM) . The first SRB may use the RLC AM.

In one example, a RRC message is a RRC Connection Reconfiguration message, and a RRC response message is a RRC Connection Reconfiguration Complete message.

It should be noted that although the above examples are illustrated to clarify the related operations of corresponding processes. The examples can be combined and/or modified arbitrarily according to system requirements and/or design considerations.

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20.

To sum up, the present invention provides a method and related communication device for handling a secondary node change in DC.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A network comprising a first base station (BS), a second BS and a third BS, comprising:
at least one storage device; and
at least one processing circuit, coupled to the at least one storage device, wherein the at least one storage device stores, and the at least one processing circuit is configured to execute instructions of:
the first BS performing a first dual connectivity (DC) operation procedure with the second BS;
the first BS transmitting a first radio resource control (RRC) message on a signaling radio bearer (SRB) to a communication device in response to the first DC operation procedure, wherein the first RRC message configures a data radio bearer (DRB) according to at least one resource of the second BS;
the first BS receiving a first RRC response message from the communication device on the SRB, in response to the first RRC message;
the second BS receiving a first plurality of packet data convergence protocol (PDCP) Service Data Units (SDUs) associated to the DRB from the communication device;
the second BS processing the first plurality of PDCP SDUs according to a first RX_NEXT, a first RX_DELIV and a first RX_REORD which are associated to the DRB;
the first BS transmitting a second RRC message on the SRB to the communication device, wherein the second RRC message configures the communication device to connect to the third BS;
the first BS receiving a second RRC response message responding to the second RRC message on the SRB from the communication device;
the second BS transmitting at least one of the first RX_NEXT, the first RX_DELIV and the first RX_REORD to the third BS;
the third BS receiving a second plurality of PDCP SDUs associated to the DRB from the communication device; and
the third BS processing the second plurality of PDCP SDUs according to the at least one of the first RX_NEXT, the first RX_DELIV and the first RX_REORD.

2. The network of claim 1, wherein the instructions further comprise:
the first BS performing a second DC operation procedure for the communication device with the second BS and a third BS for the communication device to connect to the third BS.

3. The network of claim 2, wherein the second BS transmits the COUNT value to the third BS in response to the second DC operation procedure, or in response to a new radio BS (SgNB) Release Request message received or a SgNB Change Confirm message received from the first BS.

4. The network of claim 2, wherein the instructions further comprise:
the third BS starting a t-Reordering timer associated to the DRB in response to the second DC operation procedure,_in response to a SgNB Release Request message or a SgNB Change Confirm message received from the first BS, or when detecting a transmission from the communication device.

5. The network of claim 1, wherein the instructions further comprise:
the second BS transmitting status information of at least one other PDCP SDU with at least one PDCP sequence number after the first RX_DELIV to the third BS.

6. The network of claim 5, wherein the instructions further comprise:
the third BS using a second RX_NEXT to process the second plurality of PDCP SDUs; and
the third BS setting the second RX_NEXT to a COUNT value derived from the first RX_DELIV and the status information.

7. A network comprising a first base station (BS), a second BS and a third BS, comprising:
at least one storage device; and
at least one processing circuit, coupled to the at least one storage device, wherein the at least one storage device stores, and the at least one processing circuit is configured to execute instructions of:
the first BS performing a first dual connectivity (DC) operation procedure with the second BS;
the first BS transmitting a first radio resource control (RRC) message on a signaling radio bearer (SRB) to a communication device, wherein the first RRC message configures a data radio bearer (DRB) according to at least one resource of the second BS;
the first BS receiving a first RRC response message from the communication device on the SRB, in response to the first RRC message;
the second BS receiving a first plurality of packet data convergence protocol (PDCP) Service Data Units (SDUs) associated to the DRB from the communication device;
the second BS processing the first plurality of PDCP SDUs according to a first RX_NEXT, a first RX_DELIV and a first RX_REORD which are associated to the DRB;
the first BS transmitting a second RRC message on the SRB to the communication device, wherein the second RRC message configures the communication device to connect to the third BS;
the first BS receiving a second RRC response message responding to the second RRC message on the SRB from the communication device;
the second BS transmitting a COUNT value to the third BS;
the third BS determining at least one of a second RX_NEXT, a second RX_DELIV and a second RX_REORD according to the COUNT value;
the third BS receiving a second plurality of PDCP SDUs associated to the DRB from the communication device; and
the third BS processing the second plurality of PDCP SDUs according to the second RX_NEXT, the second RX_DELIV and the second RX_REORD.

8. The network of claim 7, wherein the instructions further comprise:
the second BS updating the first RX_NEXT, the first RX_DELIV and the first RX_REORD to a plurality of other values, when processing the first plurality of PDCP SDUs.

9. The network of claim 7, wherein the third BS sets the second RX_NEXT to the COUNT value, the second RX_DELIV to the COUNT value and the second RX_REORD to the COUNT value.

10. The network of claim 7, wherein the instructions further comprise:
the second BS transmitting status information of at least one other PDCP SDU to the third BS; and
the third BS setting the second RX_NEXT, the second RX_DELIV and the second RX_REORD according to the COUNT value and the status information.
